# FASCICULE DE BREVET EUROPEEN

(11) **EP 4 572 097 B1**
(45) Date de publication et mention de la délivrance du brevet: **10.06.2026**
(21) Numéro de dépôt: 24219832.3
(22) Date de dépôt: 13.12.2024
(51) Int. Cl.: H02K 1/2795, H02K 21/24

(54) **ROTOR POUR MACHINE ÉLECTRIQUE ET MACHINE ÉLECTRIQUE TOURNANTE À FLUX AXIAL**
ROTOR FÜR EINE ELEKTRISCHE MASCHINE UND ELEKTRISCHE DREHMASCHINE MIT AXIALFLUSS
ROTOR FOR AN ELECTRIC MACHINE AND AXIAL FLUX ROTATING ELECTRIC MACHINE

(30) Priorité: 14.12.2023 FR 2314200
(43) Date de publication de la demande: 18.06.2025
(73) Titulaire: Valeo eAutomotive Germany GmbH, 91056 Erlangen (DE)
(72) Inventeur: EL-BARAKA, Khadija, 94046 CRETEIL CEDEX (FR); JUGOVIC, Svetislav, 94046 CRETEIL CEDEX (FR); DUBUS, Jean Marc, 94046 CRETEIL CEDEX (FR)
(74) Mandataire: Valeo Powertrain Systems

(56) Documents cités:
- EP-B1- 1 065 777
- CN-A- 109 921 525
- FR-A1- 3 119 703
- FR-A1- 3 127 344

## Description

### Domaine technique

L'invention concerne le domaine des machines électriques tournantes à flux axial, notamment pour un véhicule électrique ou hybride. L'invention s'intéresse plus particulièrement au rotor de ces machines électriques tournantes à flux axial.

### Arrière-plan technologique

Les machines électriques tournantes à flux axial connues comportent des aimants permanents dans le ou les rotors de la machine. Ces aimants permanents sont soumis aux champs magnétiques générées par les bobines du stator de manière à entraîner en rotation le rotor.

Les aimants permanents utilisés dans le milieu automobile sont de taille particulièrement importante ce qui a pour conséquence notable lors de leur utilisation de générer d'important courants de Foucault. Ces courants de Foucault diminuent les performances du système en générant de la chaleur au niveau des aimants, ce qui peut également détériorer le système.

Afin de diminuer les pertes par courant de Foucault, le document WO2018172633 prévoit d'utiliser un grand nombre de petits aimants qui sont assemblées les uns aux autres afin de former un aimant permanent. L'assemblage de ce type d'aimant est difficile, long et coûteux. De plus, après l'assemblage, il est difficile de garantir la tolérance de forme et de position des aimants, et il y a un risque que l'aimant se délite lors du positionnement ou lors de l'utilisation.

Le document CN109921525A prévoit quant à lui pour résoudre ce problème des pertes par courant de Foucault de réaliser des rainures orthoradiales dans l'aimant permanent sur toute la surface de l'aimant. Ces rainures orthoradiales permettent de réduire les pertes par courant de Foucault mais affaiblissent la résistance mécanique de l'aimant permanent rendant difficile sa manipulation.

Les documents FR3119703A1 et FR3127344A1 proposent des rainures radiales et orthoradiales distribuées uniformément sur l'aimant mais ne possèdent pas de portion de maintien sans rainure.

### Résumé de l'invention

Une idée à la base de l'invention est de limiter les pertes par courant de Foucault des aimants permanents d'une machine électrique tournante à flux axial.

Une autre idée à la base de l'invention est de faciliter la fabrication des aimants permanents d'une machine électrique tournante à flux axial.

Une autre idée à la base de l'invention est de faciliter la manutention des aimants permanents lors du positionnement sur le disque du rotor.

Selon un mode de réalisation, l'invention fournit un rotor pour une machine électrique à flux axial, destiné à être monté mobile en rotation autour d'un axe X et positionné axialement en face d'un stator, le rotor comportant un disque solidaire en rotation d'un arbre de sortie et une pluralité d'aimants permanents répartis autour de l'axe X, chaque aimant permanent présentant une forme de secteur de disque tronqué ; dans lequel au moins un des aimants permanents de ladite pluralité d'aimants permanents est réalisé de manière monobloc et est constituée d'une portion de maintien et une portion rainurée disposée dans une direction radiale de l'axe X à l'extérieur de la portion de maintien, ledit aimant permanent comportant une pluralité de rainures, la totalité de la pluralité de rainures étant réalisée sur la portion rainurée, dans lequel la portion de maintien présente une dimension radiale comprise entre 10 et 50% d'une dimension radiale dudit aimant permanent, ledit aimant permanent présentant une première surface située en vis-à-vis du stator, et une deuxième surface opposée à la première surface,
et dans lequel la pluralité de rainures comporte au moins une rainure radiale s'étendant dans la direction radiale, et au moins une rainure orthoradiale s'étendant dans une direction orthoradiale.

Grâce à ces caractéristiques, les rainures présentes sur l'aimant permanent permettent de limiter fortement les pertes par courant de Foucault et donc d'améliorer le rendement de la machine électrique tournante. De plus, grâce à la portion de maintien qui est donc dépourvue de rainure susceptible de la fragiliser, l'aimant permanent peut être manipulé facilement par cette portion de maintien particulièrement robuste. La portion de maintien étant située au plus proche de l'axe X, la portion rainurée est située dans la zone radialement extérieure où les pertes par courant de Foucault sont les plus importantes. Ainsi, la position des rainures est optimisée pour limiter ces pertes. Enfin, l'aimant permanent étant monobloc, sa fabrication est facilitée. Ainsi, l'ensemble de ces caractéristiques permettent d'obtenir un bon compromis entre diminution des pertes par courant de Foucault et facilité de fabrication et de manutention des aimants permanents.

Selon des modes de réalisation, un tel rotor peut comporter une ou plusieurs des caractéristiques suivantes.

Selon un mode de réalisation, plusieurs aimants permanents de ladite pluralité d'aimants permanents sont réalisés de manière monobloc et consistent chacun en une portion de maintien et une portion rainurée disposée radialement à l'extérieur de la portion de maintien, lesdits aimants permanents comportant chacun une pluralité de rainures, la totalité de la pluralité de rainures étant réalisée sur la portion rainurée.

Selon un mode de réalisation, chaque aimant permanent de ladite pluralité d'aimants permanents est réalisé de manière monobloc et consiste en une portion de maintien et une portion rainurée disposée radialement à l'extérieur de la portion de maintien, chaque aimant permanent comportant une pluralité de rainures, la totalité de la pluralité de rainures étant réalisée sur la portion rainurée.

Selon un mode de réalisation, le disque comporte des logements répartis tout autour de l'axe X, les aimants permanents étant disposés chacun dans un des logements du disque.

Selon un mode de réalisation, la rainure radiale est réalisée dans une direction d'épaisseur parallèle à l'axe X à partir de la première surface dudit aimant permanent.

Ainsi, la rainure radiale est réalisée au plus proche du stator dans la zone où il est avantageux de limiter les pertes par courant de Foucault.

Selon un mode de réalisation, la rainure radiale est réalisée de manière traversante de la première surface jusqu'à la deuxième surface dudit aimant permanent.

Ainsi, il est possible de limiter au maximum les pertes par courant de Foucault à l'aide de rainure traversante.

Selon un mode de réalisation, la pluralité de rainures comporte une pluralité de rainures radiales espacées les unes des autres.

Selon un mode de réalisation, la pluralité de rainures comporte une pluralité de rainures orthoradiales espacées les unes des autres.

Ainsi, en augmentant le nombre de rainures radiales et/ou orthoradiales, il est possible de limiter davantage les pertes par courant de Foucault.

Selon un mode de réalisation, la rainure orthoradiale est réalisée dans une direction d'épaisseur parallèle à l'axe X à partir de la première surface de l'aimant permanent.

Ainsi, la rainure orthoradiale est réalisée au plus proche du stator dans la zone où il est avantageux de limiter les pertes par courant de Foucault.

Selon un mode de réalisation, la rainure orthoradiale s'étend dans une direction d'épaisseur parallèle à l'axe X sur une partie seulement d'une dimension de l'aimant permanent dans la direction d'épaisseur.

Selon un mode de réalisation, la rainure orthoradiale présente une dimension dans une direction d'épaisseur parallèle à l'axe X comprise entre 10 % et 90% d'une dimension de l'aimant permanent dans la direction d'épaisseur.

Ainsi, grâce à l'épaisseur de la rainure orthoradiale contenu dans ledit intervalle, il est possible d'optimiser la limitation des pertes par courant de Foucault avec la tenue de l'aimant permanent.

Selon un mode de réalisation, la rainure orthoradiale est une première rainure orthoradiale, et dans lequel la pluralité de rainures comporte une deuxième rainure orthoradiale présentant une dimension dans la direction d'épaisseur comprise entre 10 % et 90% d'une dimension de l'aimant permanent dans la direction d'épaisseur, la deuxième rainure orthoradiale étant réalisée dans la direction d'épaisseur à partir de la deuxième surface de l'aimant permanent, la première rainure orthoradiale et la deuxième rainure orthoradiale étant espacées l'une de l'autre d'une distance non nulle dans la direction radiale.

Selon un mode de réalisation, la pluralité de rainures comporte une pluralité de premières rainures orthoradiales et une pluralité de deuxièmes rainures orthoradiales, les premières rainures orthoradiales étant alternées avec les deuxièmes rainures orthoradiales dans la direction radiale.

Selon un mode de réalisation, les aimants permanents et le disque du rotor sont maintenus en position les uns par rapport aux autres à l'aide d'un surmoulage.

Selon un mode de réalisation, l'invention fournit aussi une machine électrique à flux axial comprenant :
- un carter définissant un espace interne ;
- au moins un rotor précité, le rotor étant monté mobile en rotation dans l'espace interne du carter autour de l'axe X ;
- au moins un stator qui est positionné dans l'espace interne, axialement en face du rotor, et comporte un corps de stator équipé de dents qui font saillie en direction du rotor et qui sont réparties autour de l'axe X et des bobines comprenant chacune un enroulement qui est monté autour de l'une des dents.

Selon un mode de réalisation, l'invention fournit aussi un véhicule automobile comportant une machine électrique précitée.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
La figure 1 représente une vue en coupe schématique d'une machine électrique tournante à flux axial comportant un rotor et deux stators.
La figure 2 représente une vue en coupe schématique d'une machine électrique tournante à flux axial comportant deux rotors et un stator.
La figure 3 représente une vue en perspective d'un disque et des aimants permanents du rotor de la machine électrique tournante à flux axial de la figure 1.
La figure 4 représente une vue perspective d'un aimant permanent pris isolément du rotor de la machine électrique tournante à flux axial.
La figure 5 représente une vue en perspective d'un rotor de la machine électrique tournante à flux axial après surmoulage.

### Description des modes de réalisation

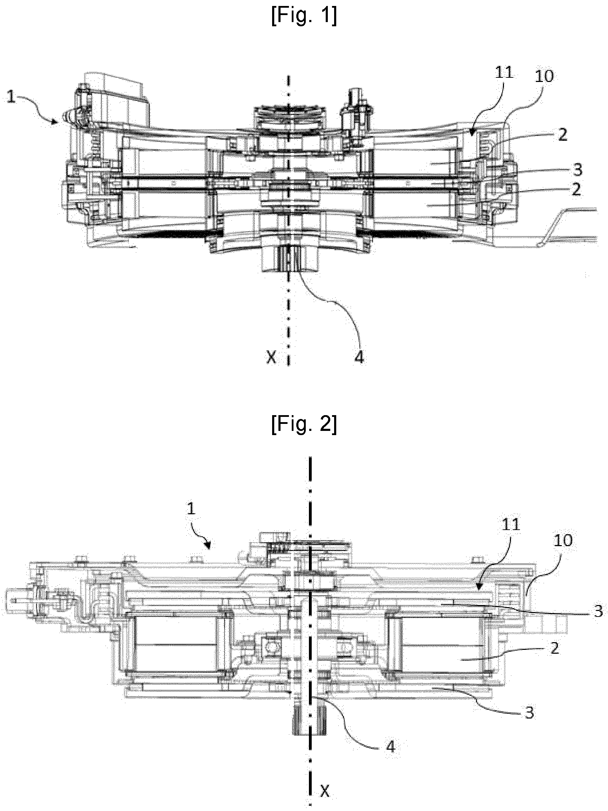

La figure 1 représente une machine électrique tournante à flux axial 1, du type à aimants permanents comprenant un carter 10 définissant un espace interne 11, deux stators 2 et un rotor 3 positionnés dans l'espace interne 11, les stators 2 étant placés de part et d'autre du rotor 3 et axialement en regard du rotor 3. Le rotor 3 est espacé axialement des deux stators de sorte à former deux entrefers.

Dans l'exemple décrit, la machine électrique à flux axial 1 est configurée pour fonctionner en mode moteur et en mode générateur. Il s'agit ici d'un moteur synchrone à aimants permanents, pour la propulsion d'un véhicule électrique.

Par véhicule, on entend désigner tout véhicule pouvant transporter des marchandises ou des personnes, tel qu'une voiture, camion, vélo ou drone.

La puissance de la machine électrique pourra être comprise entre 4 kW et 850 kW. Dans l'exemple considéré, la machine électrique présente avantageusement une tension de fonctionnement inférieure à 60 Volts, et valant de préférence 48 Volts. Typiquement, le couple fourni par la machine électrique est compris entre 30 N.m et 2000 N.m. En alternative, la machine électrique pourra présenter une tension de fonctionnement de plus de 60 V, voire plus de 80 V ou plus de 100 V, notamment 300V ou plus. Dans ce cas, la puissance de la machine pourra être comprise entre 60 kW et 300 kW.

La machine électrique à flux axial 1 comprend un arbre de sortie 4 s'étendant selon un axe X, solidaire du rotor 3 et passant au travers du rotor 3 et des stators 2. L'arbre de sortie 4 comporte un pignon de sortie qui vient s'engrener avec un réducteur (non représenté).

Le rotor 3 comporte un disque 5 solidaire en rotation de l'arbre de sortie 4 et comportant un orifice 6 traversé par l'arbre de sortie 4. Le disque 5 comporte également des logements 7 répartis régulièrement autour de l'axe X dans lesquels sont disposés des aimants permanents 8 qui présentent, par exemple, une forme de secteur de disque. Le rotor 3 sera plus particulièrement décrit en relation avec les figures 2 à 4.

Les stators 2 comportent chacun un corps de stator muni d'une pluralité d'enroulements électriques et d'une pluralité de dents portant les enroulements électriques. Un boîtier est configuré pour porter la pluralité de dents.

Les enroulements sur les dents forment ensemble un bobinage général du stator, par exemple de type triphasé. Ces enroulements sont réalisés par des spires de fils électriques autour de chaque dent.

Les enroulements sont configurés pour être alimentés électriquement de sorte à générer un champ magnétique capable de produire avec le rotor 3 de la machine électrique à flux axial 1, un couple de sortie.

La figure 2 illustre un autre mode de réalisation de la machine électrique tournante à flux axial 1. En effet, et contrairement au mode de la figure 1, la machine électrique tournante à flux axial 1 de la figure 2 comporte un stator 2 et deux rotor 3 placés de part et d'autre du stator 2, en face à face axialement avec le stator 2.

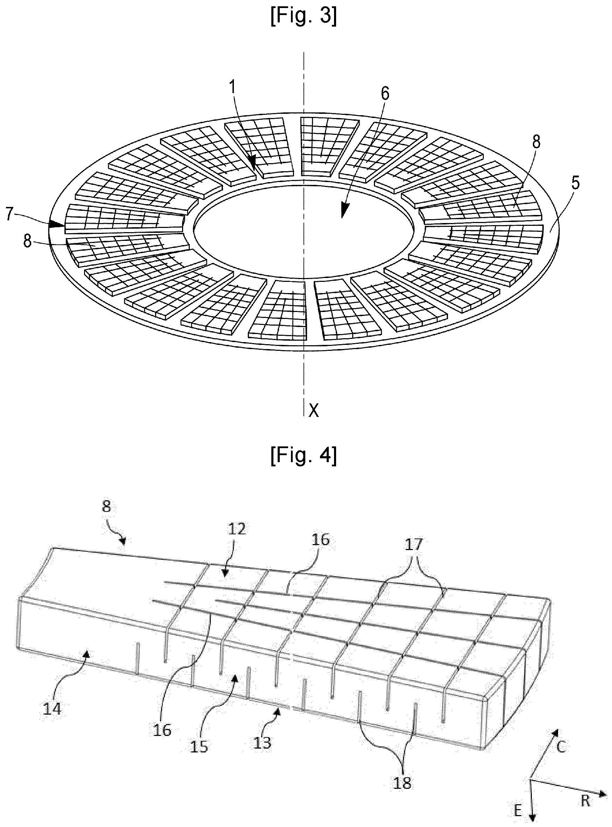

La figure 3 représente plus particulièrement le disque 5 du rotor 3 et les aimants permanents 8 associés.

Comme visible en figure 3, les aimants permanents 8 présentent chacun une forme de secteur de disque tronqué et sont répartis régulièrement autour de l'axe X. Chacun des aimants permanents 8 est placé dans un des logements 7 du disque 5. Les logements 7 présentent ainsi des formes complémentaires aux aimants permanents 8.

Les aimants permanents 8 sont disposés dans les logements 7 de sorte qu'une première surface 12 des aimants permanents 8 fasse saillie d'un côté du disque 5 qui est destiné à être en regard de l'un des stators 2 et qu'une deuxième surface 13 opposée à la première surface 12 fasse saillie d'un autre côté du disque 5 qui est destiné à être en regard de l'autre des stators 2 dans le cas de la machine électrique 1 à deux stators de la figure 1.

Dans le cas d'une machine électrique 1 à deux rotors de la figure 2, les aimants permanents 8 sont fixés à un flasque et présentent une seule surface faisant saillie du disque 5 et destinée à être en regard du stator 2.

Les aimants permanents 8 sont plus particulièrement illustrés en figure 4. Comme visible sur cette figure, chaque aimant permanent 8 est réalisé de manière monobloc et est constitué de deux portions : une portion de maintien 14 et une portion rainurée 15 qui est disposée radialement à l'extérieur de la portion de maintien 14.

Chaque aimant permanent 8 comporte également une pluralité de rainures et la totalité de ces rainures sont réalisée sur la portion rainurée 15 de sorte que la portion de maintien 14 est dépourvue de rainure.

La portion de maintien 14 présente de manière avantageuse une dimension radiale, mesurée dans la direction radiale R, comprise entre 10 et 30% d'une dimension radiale de l'aimant permanent 8. Dans l'exemple illustré en figures 3 et 4, la dimension radiale de la portion de maintien 14 est d'environ 26% de la dimension radiale de l'aimant permanent 8.

La portion rainurée 15 présente quant à elle une dimension radiale complémentaire de la dimension radiale de la portion de maintien 14, soit dans l'exemple environ 74% de la dimension radiale totale de l'aimant permanent 8.

Afin de limiter la perte par courant de Foucault, l'aimant permanent 8 comporte parmi la pluralité de rainures, des rainures radiales 16 qui s'étendent dans la direction radiale R et espacées les unes des autres. Dans l'exemple illustré en figure 4, les rainures radiales 16 sont au nombre de trois et découpent ainsi la portion rainurée 15 de l'aimant permanent 8 dans une direction orthoradiale O en quatre parties. Dans d'autres modes de réalisation, ce nombre pourrait être plus ou moins important selon la dimension de l'aimant permanent 8.

Chaque rainure radiale 16 est réalisée de manière traversante dans une direction d'épaisseur E parallèle à l'axe X à partir de la première surface 12 jusqu'à la deuxième surface 13.

Toujours afin de limiter les pertes par courant de Foucault, l'aimant permanent 8 comporte parmi la pluralité de rainures, des rainures orthoradiales s'étendant dans la direction orthoradiale O, parallèlement les unes aux autres et espacées les unes des autres.

Parmi les rainures orthoradiales, l'aimant permanent 8 comporte des premières rainures orthoradiales 17 réalisées dans la direction d'épaisseur E à partir de la première surface 12, et des deuxième rainures orthoradiales 18 réalisées dans la direction d'épaisseur E à partir de la deuxième surface 13. De plus, comme visible en figure 4, les premières rainures orthoradiales 17 sont alternées avec les deuxièmes rainures orthoradiales 18 dans la direction radiale R.

Les premières rainures orthoradiales 17 et les deuxième rainures orthoradiales 18 présentent chacune de manière avantageuse une dimension dans la direction d'épaisseur E comprise entre 10 et 90% d'une dimension dans la direction d'épaisseur E de l'aimant permanent 8. Dans l'exemple illustré en figure 4, la dimension dans la direction d'épaisseur des rainures orthoradiales 17, 18 est d'environ 60% de la dimension dans la direction d'épaisseur E de l'aimant permanent 8.

Dans l'exemple illustré en figure 4, les premières rainures orthoradiales 17 sont au nombre de six et les deuxièmes rainures orthoradiales 18 sont également au nombre de six. Dans d'autres modes de réalisation, ce nombre pourrait être plus ou moins important selon la dimension de l'aimant permanent 8. De plus, le nombre des premières rainures orthoradiales 17 pourrait être différent du nombre des deuxièmes rainures orthoradiales 18, avec par exemple cinq premières rainures orthoradiales 17 et quatre deuxièmes rainures orthoradiales 18.

Dans un autre mode de réalisation non illustré, la portion rainurée 15 peut comporter uniquement des premières rainures orthoradiales 17 ou des deuxièmes rainures orthoradiales 18 par exemple dans le cas où la machine électrique 1 comporte un seul stator 2 et deux rotors 3.

Les rainures 16, 17, 18 sont par exemple réalisées par des opérations de découpe à fil ou de découpe laser.

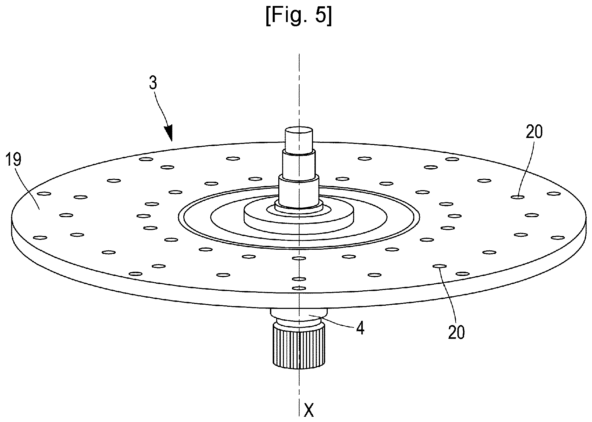

La figure 5 représente le rotor 3 après une étape de surmoulage visant à maintenir en position les aimants permanents 8 dans les logements 7 du disque 5. En effet, le disque 5 permet de mettre en position les aimants circonférentiellement et radialement avant le surmoulage, et comme visible sur cette figure 5, l'ensemble du disque 5 et des aimants permanents 8 du rotor 3 sont enveloppés par une couche de résine 19, de préférence en matière plastique, lors d'une étape de surmoulage venant bloquer précisément les positions des différents aimants permanents 8. Les trous 20 visibles sur la figure 5 représentent l'emplacement de pions qui sont positionnés dans le moule afin de garantir une position précise des aimants permanents 8 lors du surmoulage.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention comme définie par les revendications.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Rotor (3) pour une machine électrique à flux axial (1), destiné à être monté mobile en rotation autour d'un axe X et positionné axialement en face d'un stator (2), le rotor (3) comportant un disque (5) solidaire en rotation d'un arbre de sortie (4) et une pluralité d'aimants permanents (8) répartis autour de l'axe X, chaque aimant permanent (8) présentant une forme de secteur de disque tronqué ;
dans lequel au moins un des aimants permanents (8) de ladite pluralité d'aimants permanents (8) est réalisé de manière monobloc et est constituée d'une portion de maintien (14) et une portion rainurée (15) disposée dans une direction radiale (R) de l'axe X à l'extérieur de la portion de maintien (14), ledit aimant permanent (8) comportant une pluralité de rainures, la totalité de la pluralité de rainures étant réalisée sur la portion rainurée (15),
dans lequel la portion de maintien (14) présente une dimension radiale comprise entre 10 et 50% d'une dimension radiale dudit aimant permanent (8), ledit aimant permanent (8) présentant une première surface (12) située en vis-à-vis du stator (2), et une deuxième surface (13) opposée à la première surface (12),
et dans lequel la pluralité de rainures comporte au moins une rainure radiale (16) s'étendant dans la direction radiale (R), et au moins une rainure orthoradiale s'étendant dans une direction orthoradiale (O).

2. Rotor (3) selon la revendication 1, dans lequel la rainure radiale (16) est réalisée dans une direction d'épaisseur parallèle à l'axe X à partir de la première surface (12) dudit aimant permanent (8).

3. Rotor (3) selon la revendication 2, dans lequel la rainure radiale (16) est réalisée de manière traversante de la première surface (12) jusqu'à la deuxième surface (13) dudit aimant permanent (8).

4. Rotor (3) selon l'une des revendications 1 à 3, dans lequel la pluralité de rainures comporte une pluralité de rainures radiales espacées les unes des autres.

5. Rotor (3) selon l'une des revendications 1 à 4, dans lequel la pluralité de rainures comporte une pluralité de rainures orthoradiales espacées les unes des autres.

6. Rotor (3) l'une des revendications 1 à 5, dans lequel la rainure orthoradiale est réalisée dans une direction d'épaisseur parallèle à l'axe X à partir de la première surface (12) de l'aimant permanent (8).

7. Rotor (3) selon la revendication 6, dans lequel la rainure orthoradiale s'étend dans une direction d'épaisseur parallèle à l'axe X sur une partie seulement d'une dimension de l'aimant permanent (8) dans la direction d'épaisseur.

8. Rotor (3) selon la revendication 7, dans lequel la rainure orthoradiale est une première rainure orthoradiale (17), et dans lequel la pluralité de rainures comporte une deuxième rainure orthoradiale (18) présentant une dimension dans la direction d'épaisseur comprise entre 10 % et 90% d'une dimension de l'aimant permanent (8) dans la direction d'épaisseur, la deuxième rainure orthoradiale (18) étant réalisée dans la direction d'épaisseur à partir de la deuxième surface (13) de l'aimant permanent (8), la première rainure orthoradiale (17) et la deuxième rainure orthoradiale (18) étant espacées l'une de l'autre d'une distance non nulle dans la direction radiale (R).

9. Rotor (3) selon la revendication 8, dans lequel la pluralité de rainures comporte une pluralité de premières rainures orthoradiales et une pluralité de deuxièmes rainures orthoradiales, les premières rainures orthoradiales étant alternées avec les deuxièmes rainures orthoradiales dans la direction radiale (R).

10. Rotor (3) selon l'une des revendications 1 à 9, dans lequel les aimants permanents (8) et le disque (5) du rotor (3) sont maintenus en position les uns par rapport aux autres à l'aide d'un surmoulage.

11. Machine électrique à flux axial (1) comprenant:
- un carter définissant un espace interne ;
- au moins un rotor (3) selon l'une des revendications 1 à 10, le rotor (3) étant monté mobile en rotation dans l'espace interne du carter autour de l'axe X, ;
- au moins un stator (2) qui est positionné dans l'espace interne, axialement en face du rotor (3), et comporte un corps de stator (2) équipé de dents qui font saillie en direction du rotor (3) et qui sont réparties autour de l'axe X et des bobines comprenant chacune un enroulement qui est monté autour de l'une des dents.

12. Véhicule automobile comportant une machine électrique selon la revendication 11.

## Patentansprüche

1. Rotor (3) für eine Axialfluss-Elektromaschine (1), der so ausgelegt ist, dass er um eine X-Achse drehbar gelagert und axial gegenüber einem Stator (2) angeordnet ist, wobei der Rotor (3) eine Scheibe (5), die drehfest an einer Abtriebswelle (4) befestigt ist, und eine Vielzahl von Permanentmagneten (8) umfasst, die um die X-Achse verteilt sind, wobei jeder Permanentmagnet (8) die Form eines abgeschnittenen Scheibensektors aufweist;
wobei mindestens einer der Permanentmagnete (8) der Vielzahl von Permanentmagneten (8) einteilig ausgebildet ist und einen Halteabschnitt (14) sowie einen genuteten Abschnitt (15) umfasst, der in einer radialen Richtung (R) relativ zur X-Achse radial außerhalb des Halteabschnitts (14) angeordnet ist, wobei der Permanentmagnet (8) eine Vielzahl von Nuten umfasst, wobei die Gesamtheit der mehreren Nuten an dem genuteten Abschnitt (15) ausgebildet ist,
wobei der Halteabschnitt (14) eine radiale Abmessung zwischen 10 und 50 % einer radialen Abmessung des Permanentmagneten (8) aufweist, wobei der Permanentmagnet (8) eine dem Stator (2) zugewandte erste Oberfläche (12) und eine der ersten Oberfläche (12) gegenüberliegende zweite Oberfläche (13) aufweist,
und wobei die Vielzahl von Nuten mindestens eine sich in radialer Richtung (R) erstreckende Radialnut (16) und mindestens eine sich in orthoradialer Richtung (O) erstreckende Orthoradialnut umfasst.

2. Rotor (3) nach Anspruch 1, wobei die radiale Nut (16) in einer zur X-Achse parallelen Dickenrichtung von der ersten Oberfläche (12) des Permanentmagneten (8) aus ausgebildet ist.

3. Rotor (3) nach Anspruch 2, wobei die radiale Nut (16) so ausgebildet ist, dass sie von der ersten Oberfläche (12) zur zweiten Oberfläche (13) des Permanentmagneten (8) durchgeht.

4. Rotor (3) nach einem der Ansprüche 1 bis 3, wobei die mehreren Nuten mehrere voneinander beabstandete Radialnuten umfassen.

5. Rotor (3) nach einem der Ansprüche 1 bis 4, wobei die mehreren Nuten mehrere voneinander beabstandete Orthoradialnuten umfassen.

6. Rotor (3) nach einem der Ansprüche 1 bis 5, wobei die orthoradiale Nut in einer zur X-Achse parallelen Dickenrichtung von der ersten Oberfläche (12) des Permanentmagneten (8) aus ausgebildet ist.

7. Rotor (3) nach Anspruch 6, wobei sich die orthoradiale Nut in einer zur X-Achse parallelen Dickenrichtung nur über einen Teil einer Abmessung des Permanentmagneten (8) in der Dickenrichtung erstreckt.

8. Rotor (3) nach Anspruch 7, wobei die orthoradiale Nut eine erste orthoradiale Nut (17) ist und wobei die mehreren Nuten eine zweite orthoradiale Nut (18) umfassen, die eine Abmessung in Dickenrichtung zwischen 10 % und 90 % einer Abmessung des Permanentmagneten (8) in Dickenrichtung aufweist, wobei die zweite orthoradiale Nut (18) in Dickenrichtung von der zweiten Oberfläche (13) des Permanentmagneten (8) ausgehend ausgebildet ist, wobei die erste orthoradiale Nut (17) und die zweite orthoradiale Nut (18) in radialer Richtung (R) um einen Abstand ungleich Null voneinander beabstandet sind.

9. Rotor (3) nach Anspruch 8, wobei die Vielzahl von Nuten eine Vielzahl von ersten orthoradialen Nuten und eine Vielzahl von zweiten orthoradialen Nuten umfasst, wobei die ersten orthoradialen Nuten in radialer Richtung (R) mit den zweiten orthoradialen Nuten abwechseln.

10. Rotor (3) nach einem der Ansprüche 1 bis 9, wobei die Permanentmagnete (8) und die Scheibe (5) des Rotors (3) mittels einer Umspritzung relativ zueinander in Position gehalten werden.

11. Elektrische Axialflussmaschine (1), umfassend:
- ein Gehäuse, das einen Innenraum definiert;
- mindestens einen Rotor (3) gemäß einem der Ansprüche 1 bis 10, wobei der Rotor (3) so angebracht ist, dass er innerhalb des Innenraums des Gehäuses um die X-Achse drehbarRilleist;
- mindestens einen Stator (2), der im Innenraum axial gegenüber dem Rotor (3) angeordnet ist und einen Statorkörper (2) umfasst, der mit Zähnen versehen ist, die in Richtung des Rotors (3) vorstehen und um die X-Achse verteilt sind, sowie Spulen, die jeweils eine Wicklung umfassen, die um einen der Zähne herum angebracht ist.

12. Kraftfahrzeug, das eine elektrische Maschine gemäß Anspruch 11 umfasst.

## Claims

1. A rotor (3) for an axial-flux electric machine (1), designed to be mounted so as to rotate about an X-axis and positioned axially opposite a stator (2), the rotor (3) comprising a disc (5) rotatably secured to an output shaft (4) and a plurality of permanent magnets (8) distributed around the X-axis, each permanent magnet (8) having the shape of a truncated disc sector;
in which at least one of the permanent magnets (8) of said plurality of permanent magnets (8) is formed as a single piece and comprises a retaining portion (14) and a grooved portion (15) arranged in a radial direction (R) relative to the X-axis radially outside of the retaining portion (14), said permanent magnet (8) comprising a plurality of grooves, the entirety of the plurality of grooves being formed on the grooved portion (15),
wherein the retaining portion (14) has a radial dimension of between 10 and 50% of a radial dimension of said permanent magnet (8), said permanent magnet (8) having a first surface (12) facing the stator (2), and a second surface (13) opposite the first surface (12),
and wherein the plurality of grooves comprises at least one radial groove (16) extending in the radial direction (R), and at least one orthoradial groove extending in an orthoradial direction (O).

2. Rotor (3) according to claim 1, wherein the radial groove (16) is formed in a thickness direction parallel to the X-axis from the first surface (12) of said permanent magnet (8).

3. Rotor (3) according to claim 2, wherein the radial groove (16) is formed so as to pass through from the first surface (12) to the second surface (13) of said permanent magnet (8).

4. Rotor (3) according to any one of claims 1 to 3, wherein the plurality of grooves comprises a plurality of radial grooves spaced apart from one another.

5. Rotor (3) according to any one of claims 1 to 4, wherein the plurality of grooves comprises a plurality of orthoradial grooves spaced apart from one another.

6. Rotor (3) according to any one of claims 1 to 5, wherein the orthoradial groove is formed in a thickness direction parallel to the X-axis from the first surface (12) of the permanent magnet (8).

7. Rotor (3) according to claim 6, wherein the orthoradial groove extends in a thickness direction parallel to the X-axis over only a portion of a dimension of the permanent magnet (8) in the thickness direction.

8. Rotor (3) according to claim 7, wherein the orthoradial groove is a first orthoradial groove (17), and wherein the plurality of grooves comprises a second orthoradial groove (18) having a dimension in the thickness direction of between 10% and 90% of a dimension of the permanent magnet (8) in the thickness direction, the second orthoradial groove (18) being formed in the thickness direction from the second surface (13) of the permanent magnet (8), the first orthoradial groove (17) and the second orthoradial groove (18) being spaced apart from one another by a non-zero distance in the radial direction (R).

9. Rotor (3) according to claim 8, wherein the plurality of grooves comprises a plurality of first orthoradial grooves and a plurality of second orthoradial grooves, the first orthoradial grooves being alternated with the second orthoradial grooves in the radial direction (R).

10. Rotor (3) according to any one of claims 1 to 9, wherein the permanent magnets (8) and the disc (5) of the rotor (3) are held in position relative to one another by means of an overmolding.

11. Axial-flux electric machine (1) comprising:
- a housing defining an internal space;
- at least one rotor (3) according to any one of claims 1 to 10, the rotor (3) being mounted so as to be rotatable within the internal space of the housing about the X-axis;
- at least one stator (2) which is positioned in the internal space, axially opposite the rotor (3), and comprises a stator body (2) equipped with teeth which project towards the rotor (3) and which are distributed around the X-axis, and coils each comprising a winding which is mounted around one of the teeth.

12. A motor vehicle comprising an electric machine according to claim 11.
